# EUROPEAN PATENT SPECIFICATION

(11) **EP 1 564 094 B1**
(45) Date of publication and mention of the grant of the patent: **15.08.2007**
(21) Application number: 04100170.2
(22) Date of filing: 20.01.2004
(51) Int. Cl.: B60S 1/38

(54) **Windscreen wiper device**
Scheibenwischeranlage
Dispositif d'essuie-glace

(43) Date of publication of application: 17.08.2005
(73) Proprietor: Federal-Mogul S.A., 6790 Aubange (BE)
(72) Inventor: Boland, Xavier, 6700, Arlon (BE); Henin, Pierre, 6730, Bellefontaine (BE)
(74) Representative: Hooiveld, Arjen Jan Winfried

(56) References cited:
- WO-A-01/51324
- WO-A-02/04269
- DE-A1- 10 038 397
- US-A1- 2003 019 066
- US-B1- 6 668 419

## Description

The invention relates to a windscreen wiper device comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, which windscreen wiper device comprises a connecting device for an oscillating wiper arm, wherein said oscillating arm is pivotally connected to said connecting device about a pivot axis near one end.

Such a windscreen wiper device is generally known (see document DE 10038397A1). The prior art windscreen wiper device is in particular designed as a "yokeless" wiper device, wherein use is no longer made of several yokes pivotally connected to each other, but wherein the wiper blade is biassed by the carrier element, as a result of which it exhibits a specific curvature. The oscillating arm of the prior art windscreen wiper device comprises a projecting pin on one side thereof, which is inserted sideways into a through hole of the connecting device.

The known connecting device is attached to the unit consisting of the elongate wiper blade and the longitudinal strips through a clamping operation, wherein clamping parts of said connecting device are clamped round longitudinal sides of the strips. In order to lock said connecting device in a direction along the longitudinal strips, said strips are each provided with a recess at their exterior longitudinal side so that the clamping parts of the connecting device rest in said recess. Obviously, cutting such a precisely shaped recess in each longitudinal strip needs additional tools and an extra step in manufacturing said windshield wiper device.

The object of the invention is to overcome the drawbacks of the prior art as indicated above, in particular to provide a windscreen wiper device wherein the connecting device and the unit consisting of the wiper blade and the strips are interconnected in a durable, solid manner, without the need of additional tools and an extra cutting step in the manufacturing process of the windshield wiper device.

In order to accomplish that objective, a windscreen wiper device of the kind referred to in the introduction is characterized in that said connecting device is provided with at least one rivet-like protrusion made integral therewith having a restricted neck and an enlarged head, wherein said restricted neck extends through a hole in a longitudinal strip and wherein said enlarged head is disposed on a longitudinal side of the longitudinal strip facing away from the connecting device. In other words, a "rivet-like" protrusion takes care of connecting the connecting device to a longitudinal strip, also called "flexor" or "backing strip".

In a preferred embodiment of a windscreen wiper device according to the invention said protrusion is made on the connecting device through a heating operation. Such a heating operation is preferably carried out through a laser or an ultrasonic device.

In another preferred embodiment of a windscreen wiper device according to the invention the hole is made in the longitudinal strip through a stamping operation. In that way the shape of the hole can be accurately controlled. In the alternative, the hole is made by cutting or sawing.

In another preferred embodiment of a windscreen wiper device according to the invention the connecting device is provided with at least two opposing protrusions each extending through a hole in one of the longitudinal strips. Particularly, at least two "rivet-like" protrusions take care of connecting one longitudinal strip to the connecting device.

In another preferred embodiment of a windscreen wiper device according to the invention the connecting device is made of plastic. Preferably, the connecting device is made of a thermoplastic material.

The invention will now be explained in more detail with reference to figures illustrated in a drawing, wherein:
- Figure 1 is a perspective, schematic view of a preferred embodiment of a windscreen wiper device according to the invention;
- Figures 2 and 3 show details of the windscreen wiper device of Figure 1;

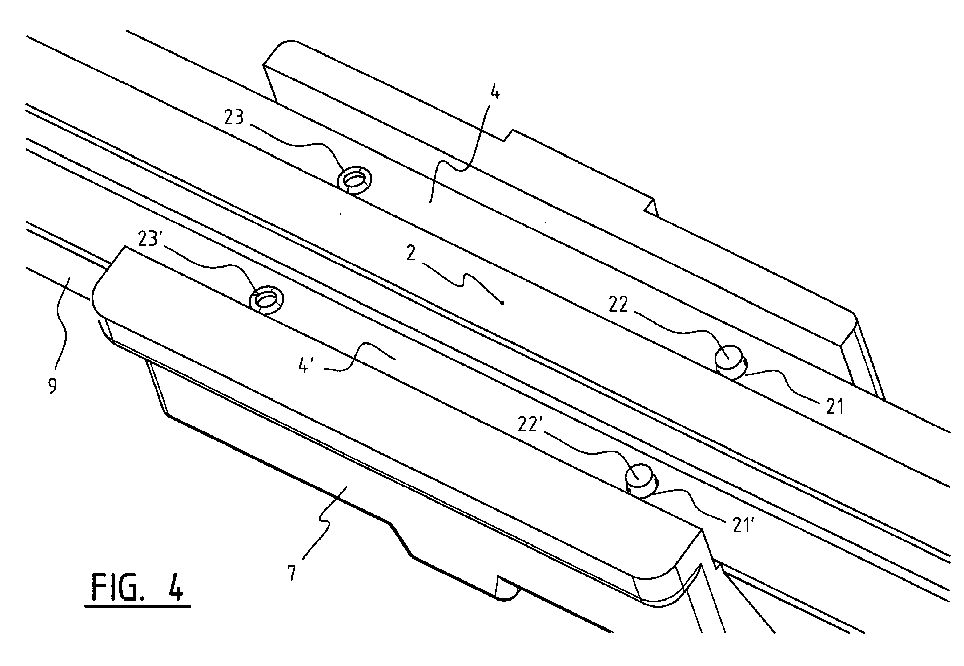

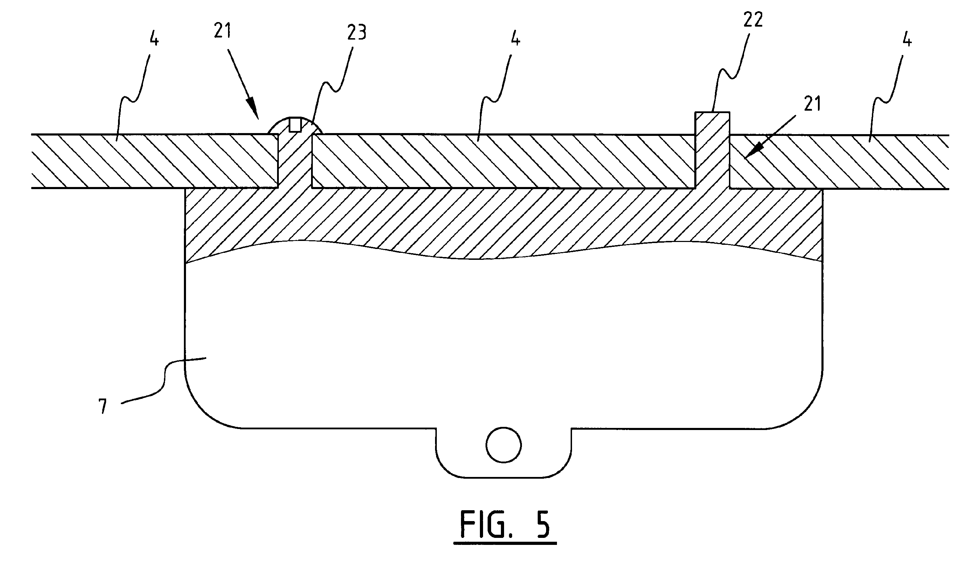

- Figure 4 refers to a cross-sectional view of the connecting device of the windscreen wiper device of Figure 1.

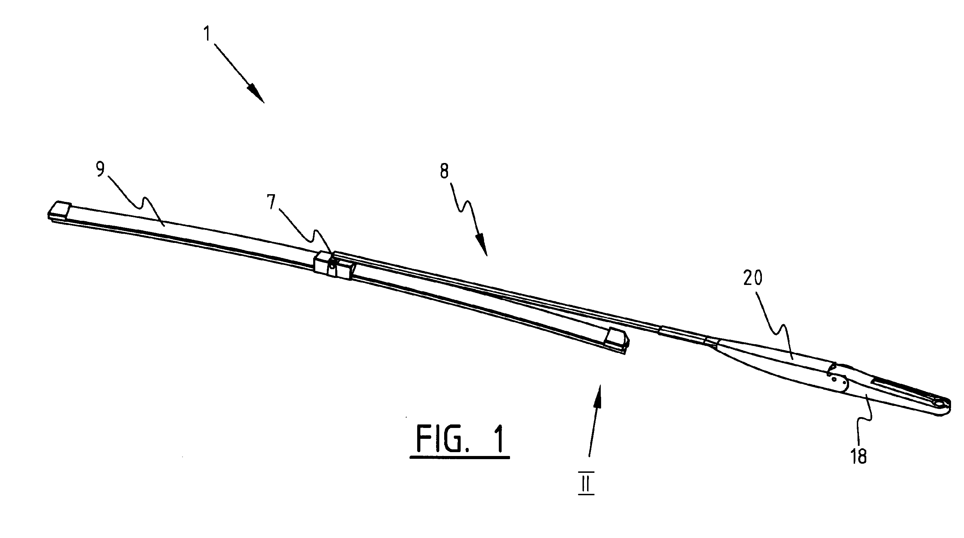

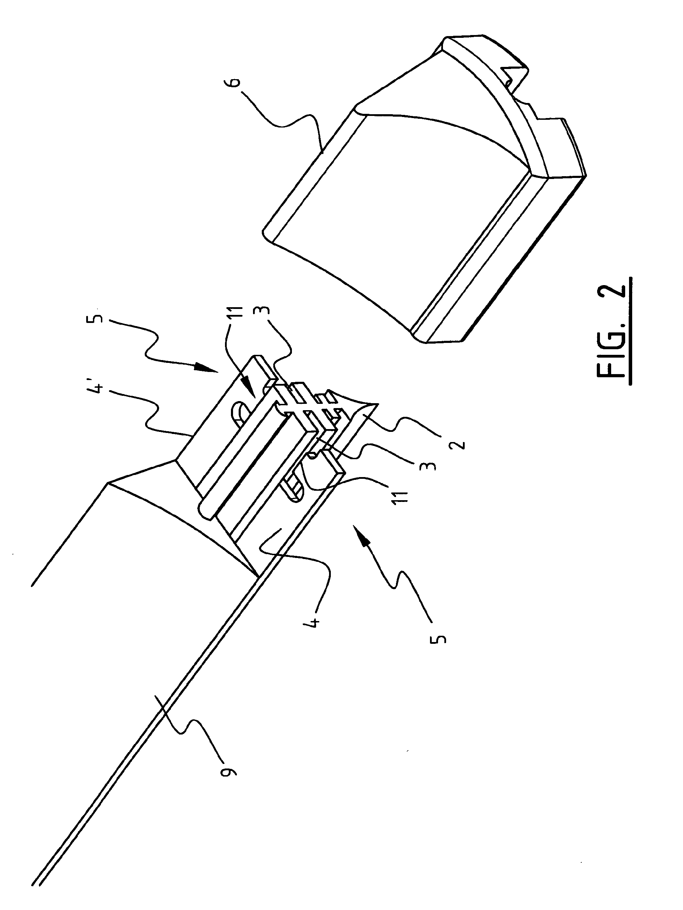

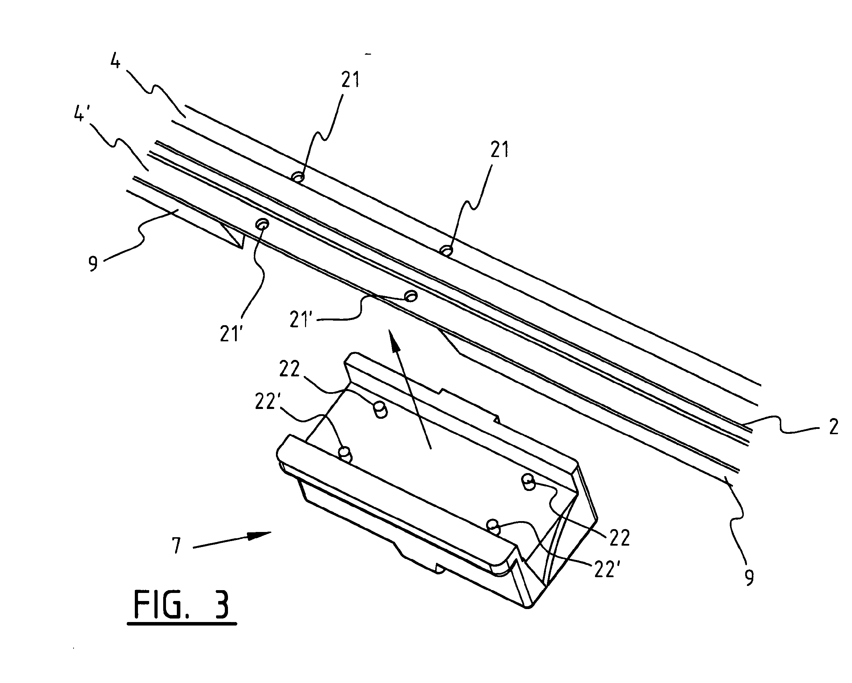

Figures 1, 2 and 3 show a preferred variant of a windscreen wiper device 1 according to the invention. Said windscreen wiper device is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the rubber wiper blade 2, as it were, which is thus biassed in a curved position (the curvature in operative position being that of a windscreen to be wiped). Neighbouring ends 5 of strips 4 are interconnected on either side of the windscreen wiper device 1 by means of connecting pieces 6 functioning as clamping members. In this embodiment, the connecting pieces 6 are separate constructional elements, which may be form-locked ("positive locking" or "having positive fit") as well as force-locked to the ends 5 of strips 4. In another preferred variant, said connecting pieces 6 are in one piece with the strips 4 made of spring band steel. In the latter case said connecting pieces form transverse bridges for the strips 4, as it were.

The windscreen wiper device 1 is furthermore built up of a connecting device 7 of plastic material for an oscillating wiper arm 8. Connecting device 7 is provided with four protrusions 9 made in one piece of thermoplastic material, wherein two protrusions 9 are located on each longitudinal side of the connecting device 7. Each protrusion 9 comprises a restricted neck 10 and an enlarged head 11 in such a way that the restricted neck 9 extends through a hole 12 stamped in a longitudinal strip 4 and that the enlarged head 11 is disposed on a longitudinal side 13 of the longitudinal strip 4 that faces away from the connecting device 7. All protrusions 9 are made on the connecting device 7 by a heating operation, that is that a part of the connecting device 7 is melted in the form of a protrusion 9.

## Claims

1. A windscreen wiper device (1) comprising an elastic, elongated carrier element, as well as an elongated wiper blade (2) of a flexible material, which can be placed in abutment with a windscreen to be wiped, which wiper blade (2) includes opposing longitudinal grooves (3) on its longitudinal sides, in which grooves (3) spaced-apart longitudinal strips (4) of the carrier element are disposed, wherein neighbouring ends (5) of said longitudinal strips (4) are interconnected by a respective connecting piece (6), which windscreen wiper device (1) comprises a connecting device (7) for an oscillating wiper arm (8), wherein said oscillating arm (8) is pivotally connected to said connecting device (7) about a pivot axis near one end, **characterized in that** said connecting device (7) is provided with at least one rivet-like protrusion (9) made integral therewith having a restricted neck (10) and an enlarged head (11), wherein said restricted neck (10) extends through a hole (12) in a longitudinal strip (4) and wherein said enlarged head (11) is disposed on a longitudinal side of the longitudinal strip (4) facing away from the connecting device (7).

2. A windscreen wiper device (1) according to claim 1, wherein said protrusion (9) is made on the connecting device (7) through a heating operation.

3. A windscreen wiper device (1) according to claim 2, wherein the hole (12) is made in the longitudinal strip (4) through a stamping operation.

4. A windscreen wiper device (1) according to claim 1, 2 or 3, wherein the connecting device (7) is provided with at least two opposing rivet-like protrusions (9) each extending through a hole (12) in one of the longitudinal strips (4).

5. A windscreen wiper device (1) according to any of the preceding claims 1 through 4, wherein the connecting device (7) is made of plastic.

## Patentansprüche

1. Scheibenwischeranlage (1) umfassend ein elastisches längliches Trägerelement sowie ein längliches Wischerblatt (2) aus einem biegsamen Material, das in Anlage mit einer zu wischenden Windschutzscheibe gelegt werden kann, wobei das Wischerblatt (2) an seinen Längsseiten gegenüber liegende Längsausnehmungen (3) aufweist, in den Ausnehmungen (3) im Abstand angeordnete Längsstreifen (4) des Trägerelements eingerichtet sind, bei der benachbarte Enden (5) der Längsstreifen (4) durch ein entsprechendes Verbindungsstück (6) miteinander verbunden sind, wobei die Scheibenwischeranlage (1) eine Verbindungsvorrichtung (7) für einen hin- und hergehenden Wischerarm (8) umfasst, wobei der hin- und hergehende Arm (8) mit der Verbindungsvorrichtung (7) drehbar um eine Drehachse in der Nähe des einen Endes verbunden ist, **dadurch gekennzeichnet, dass** die Verbindungsvorrichtung (7) mit zumindest einem nietähnlichen Vorsprung (9) versehen ist, der mit dieser eine Einheit bildend hergestellt ist und eine Einengung (10) und einen vergrößerten Kopf (11) aufweist, wobei sich die Einengung (10) durch ein Loch (12) in einem Längsstreifen (4) erstreckt und der vergrößerte Kopf (11) an einer Längsseite des Längsstreifens (4), die von der Verbindungsvorrichtung (7) weg zeigt, angeordnet ist.

2. Scheibenwischeranlage (1) nach Anspruch 1, bei der der Vorsprung (9) durch einen Erhitzungsvorgang an der Verbindungsvorrichtung (7) hergestellt wird.

3. Scheibenwischeranlage (1) nach Anspruch 2, bei der das Loch (12) durch einen Stanzvorgang in dem Längsstreifen (4) hergestellt wird.

4. Scheibenwischeranlage (1) nach Anspruch 1, 2 oder 3, bei der die Verbindungsvorrichtung (7) mit mindestens zwei gegenüber liegenden nietähnlichen Vorsprüngen (9) versehen ist, die sich jeweils durch ein Loch (12) in einem der Längsstreifen (4) erstrecken.

5. Scheibenwischeranlage (1) nach einem der vorhergehenden Ansprüche 1 bis 4, bei der die Verbindungsvorrichtung (7) aus Kunststoff besteht.

## Revendications

1. Dispositif formant essuie-glace (1) qui comprend un élément de support élastique de forme allongée, ainsi qu'une lame d'essuie-glace (2) de forme allongée en matériau flexible, qui peut être placée en appui contre un pare-brise à nettoyer, laquelle lame d'essuie-glace (2) comporte sur ses côtés longitudinaux des gorges longitudinales opposées (3), dans lesquelles gorges (3) sont disposées des bandes longitudinales (4), espacées l'une de l'autre, de l'élément de support, des extrémités adjacentes (5) desdites bandes longitudinales (4) étant reliées entre elles par une pièce de raccordement respective (6), le dispositif formant essuie-glace (1) comprenant un dispositif de raccordement (7) d'un bras d'essuie-glace oscillant (8), ledit bras oscillant (8) étant raccordé au dispositif de raccordement (7) de façon à pivoter autour d'un axe de pivotement situé près de l'une des extrémités, **caractérisé en ce que** ledit dispositif de raccordement (7) est doté d'au moins une saillie (9) en forme de rivet réalisée en venue de matière et comportant un petit col (10) et une grosse tête (11), ledit petit col (10) s'étendant à travers un trou (12) ménagé dans la bande longitudinale (4) et ladite grosse tête (11) étant placée sur un côté longitudinal de la bande longitudinale (4) orientée à l'opposé du dispositif de raccordement (7).

2. Dispositif formant essuie-glace (1) selon la revendication 1, dans lequel ladite saillie est réalisée sur le dispositif de raccordement par une opération de chauffage.

3. Dispositif formant essuie-glace (1) selon la revendication 2, dans lequel ledit trou (12) est ménagé dans la bande longitudinale (4) par une opération d'estampage.

4. Dispositif formant essuie-glace (1) selon la revendication 3, dans lequel le dispositif de raccordement (7) est doté d'au moins deux saillies opposées (9) s'étendant chacune à travers un trou (12) ménagé dans l'une des bandes longitudinales (4).

5. Dispositif formant essuie-glace (1) selon l'une quelconque des revendications précédente 1 à 4, dans lequel le dispositif de raccordement (7) est réalisé à partir d'une matière plastique.
